Europäisches Patentamt

European Patent Office

Office européen des brevets

(11) Publication number: **0 317 282**
**B1**

(12) **EUROPEAN PATENT SPECIFICATION**

(45) Date of publication of patent specification: **30.01.91**

(21) Application number: **88310806.0**

(22) Date of filing: **16.11.88**

(51) Int. Cl.⁵: **F 16 L 3/00, B 25 J 18/06, B 25 J 9/14, F 15 B 15/10, F 03 G 7/06**

(54) **Hose construction.**

(30) Priority: **18.11.87 JP 289632/87**

(43) Date of publication of application:
**24.05.89 Bulletin 89/21**

(45) Publication of the grant of the patent:
**30.01.91 Bulletin 91/05**

(84) Designated Contracting States:
**DE GB NL**

(56) References cited:
**DE-A-3 542 277**
**GB-A-2 100 826**

(73) Proprietor: **THE YOKOHAMA RUBBER CO., LTD.**
**36-11, Shinbashi 5-chome Minato-ku**
**Tokyo, 105 (JP)**
(73) Proprietor: **CHIYODA KENKI CO. LTD.**
**4-2-17 Higashi Nippori**
**Arakawa-ku Tokyo (JP)**

(72) Inventor: **Takemae, Eiji**
**24-17, Takahamadai**
**Hiratsuka-shi Kanagawa-ken (JP)**
Inventor: **Koizumi, Masakazu**
**6-16, Miyanomae**
**Hiratsuka-shi Kanagawa-ken (JP)**
Inventor: **Ishibashi, Tadashi**
**3-6-6, Aoki**
**Kawaguchi-shi Saitama-ken (JP)**

(74) Representative: **Gordon, Martin et al**
**G.F. Redfern & Company Marlborough Lodge 14**
**Farncombe Road**
**Worthing West Sussex, BN11 2BT (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Description

This invention relates to hoses suitable for use in transporting or otherwise handling fluids under adverse conditions.

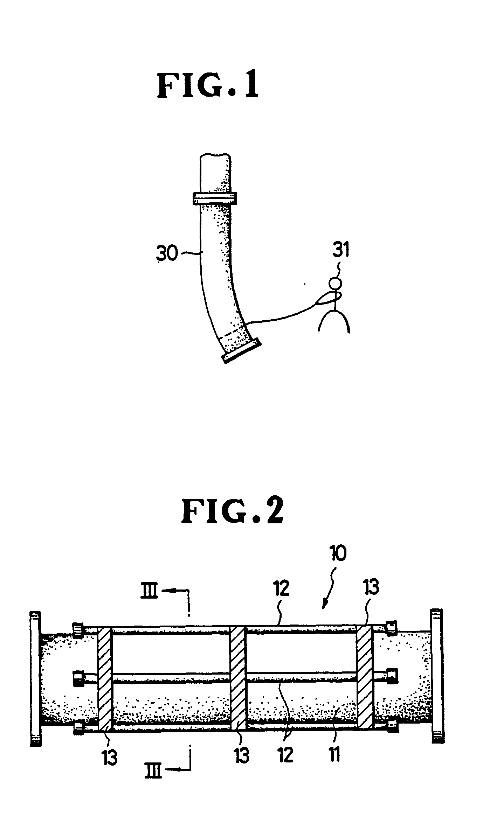

In conveying fluids from their sources of supply to any selected sites using a large diameter hose, it is often necessary to manually forcibly bend or position the free end of the hose toward the site as shown in Fig. 1 of the accompanying drawings where a large diameter flexible hose 30 is being manually bent into position by operator 31. Because this type of hose is rather rigid in nature and heavy in weight, such prior loading is unsatisfactory in that it gives rise to the following problems:-

1. Limited manpower to permit sufficient bending of large-diameter, heavy-weight hoses.

2. Interrupted loading operation depending upon the conditions involved.

3. Difficult remote control.

4. Laborious, time-consuming and dangerous.

It is known to provide a flexible hose with a reinforcement cord orientated at an angle of not more than 54°44' in an axial plane as disclosed for instance in Japanese Patent Publication No. 52-40378. An angle of 54°44' is taken as the maximum angle at which the reinforcing cord tends to laterally dilate when internal fluid pressure is applied to the hose. Due to the cord being so formed, this known hose expands widthwise and shortens lengthwise when under internal fluid pressure.

With the foregoing difficulties of the prior art in view, the present invention seeks to provide a new and improved hose construction which enables easier bending of a main hose of large diameter and heavy weight to a selected angle and in a predetermined direction without relying on manual strength.

According to the invention, there is provided a composite hose comprising a flexible main hose of large diameter and a subhose of small diameter having a layer of reinforcement and disposed along and secured to the main hose by fastening means, the layer of reinforcement being oriented to laterally dilate when internal fluid pressure is applied to the subhose thereby reducing the overall length of the subhose, whereby the main hose is bendable in a predetermined direction by the action of the subhose.

Embodiments of this invention will now be described, by way of example, with reference to the accompanying drawings in which:-

Fig. 1 is a schematic diagram of the prior art, showing the manner in which a large diameter flexible hose is being manually bent at one end;

Fig. 2 is a side-elevational view of a composite hose providing a first embodiment of the present invention;

Fig. 3 is a cross-sectional view taken along the line III-III of Fig 2;

Fig. 4 is an end view of a composite hose providing a second embodiment of the invention; and

Fig. 5 is a side view of one end of the composite hose shown in Fig. 4.

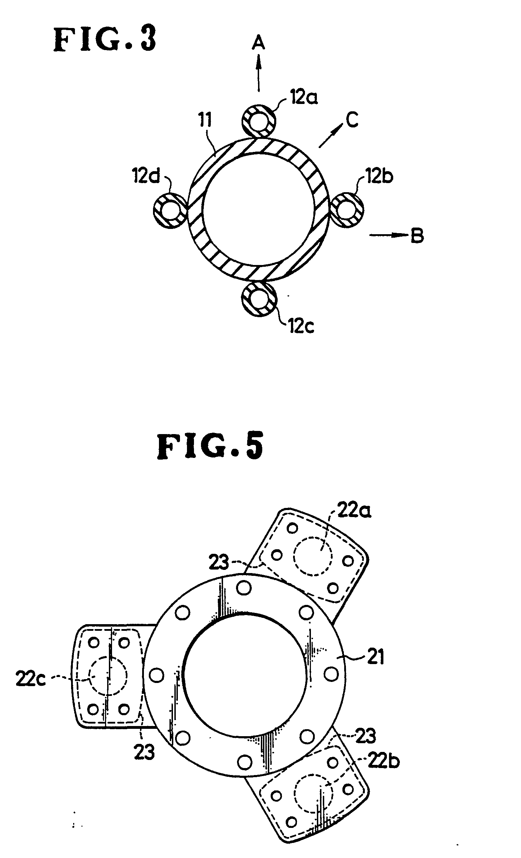

Referring now to the drawings and in particular to Figs. 2 and 3, there is shown a composite hose 10 essentially comprising a main hose 11 of a large diameter, and a subhose arrangement 12 of small diameter subhoses disposed along and secured to the main hose 11 by any suitable fastening means such as strips of metal 13 extending circumferentially around the subhose arrangement 12 and also the main hose 11. In this embodiment, the subhose arrangement 12 is shown as being composed of four hoses 12a, 12b, 12c and 12d located in mutually-spaced relationship to one another and held in close contact with the main hose 11.

Each subhose is so structured as to have a layer of reinforcement oriented at a specified angle with respect to the longitudinal axis. The reinforcing layer is arranged to undergo lateral dilation under pressure and thus is capable of reducing the overall length of the subhose. Detailed orientations for the reinforcement are not shown as they are commonly known in the art.

Each subhose preferably has a diameter in the range of $\frac{1}{10}$ to $\frac{1}{5}$ times that of the main hose. Diameters if smaller than $\frac{1}{10}$ of the main hose diameter would give rise to a need for added subhoses and increased pressure and if greater than $\frac{1}{5}$ would result in the subhoses being bulky, leading to handling inconveniences and cost burdens.

The angle of the reinforcing layer should preferably be in the range of 20 to 40 degrees to an axial plane. Departures from the specified range would render the finished subhose less dilative even under pressure, giving insufficient bending of the main hose.

Upon application of internal fluid pressure, the reinforcing layer thus oriented gets dilative, approaching the angle of 54°44' so that the subhose expands and shortens, causing the main hose to bend at a selected angle and in a predetermined direction in a remote-controlled fashion.

There is no particular restriction imposed on the number of subhoses that should be provided. The main hose when combined with one, two or three or more subhoses is bendable in one, two or three or more directions respectively. If the main hose is required to be bent in a direction indicated by the arrow A in Fig. 3, internal fluid pressure may be applied to the subhose 12a. Bending in the B direction may be effected by placing the hose 12b in a pressurised condition and bending in the C direction by feeding pressure to both the hose 12a and the hose 12b.

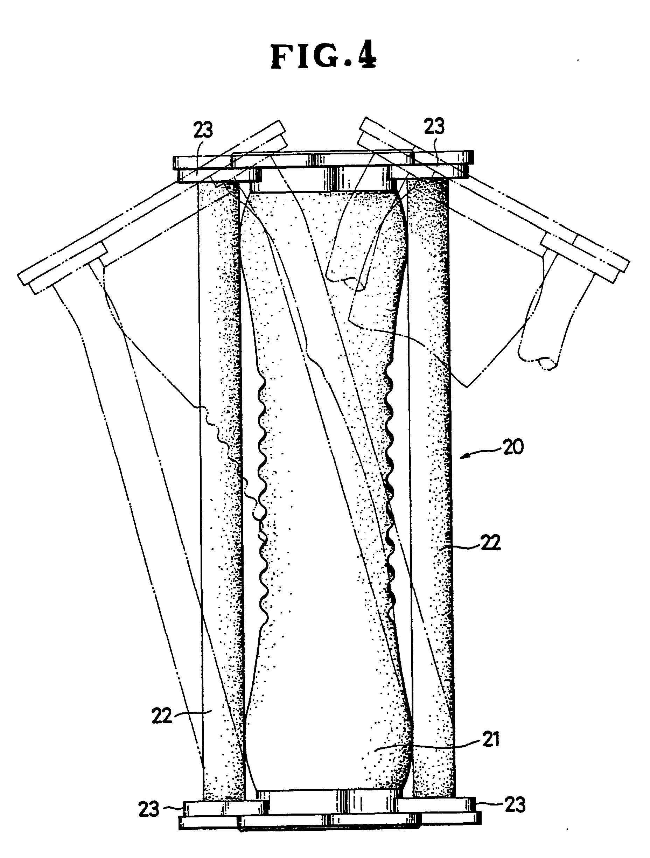

Figs. 4 and 5 are directed to a second embodiment of the invention in which a composite hose 20 is made up of a main hose 21 and a subhose arrangement 22 slightly spaced therefrom. The hoses 21 and of the arrangement 22 are respectively similar in diameter and structure to the hoses 11 and 12 of the first embodiment. Three subhoses 22a, 22b and 22c are used in the arrangement 22. Each of the hoses 22a to 22c is fixedly attached at both ends to fastening means in the form of flange portions 23 secured to opposite ends of the main hose 21. In bending the hose 21 in a given direction or directions, either one or two of the hoses 22a to 22c may be pressurised as in the first embodiment.

For use of the composite hose 10 or 20 described above, the subhoses 12a to 12d or 22a to 22c are coupled to a pressure-supplying hose, not shown, with a change-over valve interposed therebetween. The valve is remote-controlled to selectively feed pressure to the subhoses.

The embodiments described above ensure safe and efficient loading particularly for heavy-duty purposes under all-weather conditions.

## Claims

1. A composite hose comprising a flexible main hose (21) of large diameter, and a subhose (22) of small diameter having a layer of reinforcement and disposed along and secured to said main hose by fastening means, said layer of reinforcement being oriented to laterally dilate when internal fluid pressure is applied to the subhose, thereby reducing the overall length of said subhose, whereby said main hose is bendable in a predetermined direction by the action of said subhose.

2. A hose according to claim 1, wherein said subhose has a diameter in the range of $\frac{1}{10}$ to $\frac{1}{5}$ times the diameter of said main hose.

3. A hose according to claim 1, wherein in the unpressurised subhose, said layer of reinforcement is oriented at an angle in the range of 20 to 40 degrees to an axial plane.

4. A hose according to claim 1 and further including a plurality of mutually-spaced subhoses arranged contiguous to or spaced from said main hose.

## Patentansprüche

1. Verbundschlauch mit einem flexiblen Hauptschlauch (21) von großem Durchmesser und einem Nebenschlauch (22), der einen kleinen Durchmesser und eine Verstärkungsschicht hat und entlang dem Hauptschlauch angeordnet und durch eine Befestigungseinrichtung an diesem befestigt ist, wobei die Verstärkungsschicht derart orientiert ist, daß sie sich lateral erweitert, wenn der Druck eines internen Fluids auf den Nebenschlauch angelegt wird, wodurch die Gesamtlänge des Nebenschlauchs reduziert wird, wobei der Hauptschlauch durch die Wirkung des Nebenschlauchs in eine vorbestimmte Richtung biegbar ist.

2. Schlauch nach Anspruch 1, wobei der Nebenschlauch einen Durchmesser im Bereich von $\frac{1}{10}$ bis $\frac{1}{5}$ des Durchmessers des Hauptschlauchs hat.

3. Schlauch nach Anspruch 1, wobei die Verstärkungsschicht in dem drucklosen Nebenschlauch mit einem Winkel im Bereich von 20 bis 40° gegenüber einer axialen Ebene orientiert ist.

4. Schlauch nach Anspruch 1, der weiterhin eine Vielzahl von gegenseitig beabstandeten Nebenschläuchen enthält, die benachbart zu oder beabstandet von dem Hauptschlauch angeordnet sind.

## Revendications

1. Tuyau souple composé comprenant un tuyau souple principal (21) de grand diamètre et un tuyau souple secondaire (22) de petit diamètre possédant une couche de renfort, disposé et fixé le long de ce tuyau souple principal par des moyens de fixation, ladite couche de renfort étant orientée pour se dilater latéralement lorsqu'une pression de fluide intérieure est appliquée au tuyau souple secondaire, réduisant ainsi la longueur hors-tout dudit tuyau souple secondaire, ledit tuyau principal pouvant ainsi être cintré dans un sens prédéfini par l'action dudit tuyau souple secondaire.

2. Tuyau souple selon la revendication 1, caractérisé par le fait que ledit tuyau secondaire à un diamètre compris entre un dixième et un cinquième du diamètre dudit tuyau souple principal.

3. Tuyau souple selon la revendication 1, caractérisé par le fait que, dans le tuyau souple secondaire exempt de pression, ladite couche de renfort est orientée selon un angle compris entre 20 et 40° avec un plan axial.

4. Tuyau souple selon la revendication 1, comprenant de plus une pluralité de tuyaux souples secondaires espacés entre eux et disposés en position contiguë ou non contiguë audit tuyau souple principal.

# FIG.1

30    31

# FIG.2

10
III    12    13
13    III    13    12    11

# FIG.3

# FIG.5

# FIG.4